(19) Europäisches Patentamt
European Patent Office
Office européen des brevets

(11) **EP 0 973 956 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.$^7$: **C23C 4/10**, C23C 30/00

(21) Anmeldenummer: **98919141.6**

(22) Anmeldetag: **24.03.1998**

(86) Internationale Anmeldenummer:
**PCT/EP98/01730**

(87) Internationale Veröffentlichungsnummer:
**WO 98/45498 (15.10.1998 Gazette 1998/41)**

(54) **TRÄGERKÖRPER MIT EINER SCHUTZBESCHICHTUNG**

SUBSTRATE BODY WITH A PROTECTIVE COATING

ELEMENT SUPPORT MUNI D'UNE COUCHE PROTECTRICE

(84) Benannte Vertragsstaaten:
**CH DE ES FR GB GR IT LI NL SE**

(30) Priorität: **08.04.1997 DE 19714432**

(43) Veröffentlichungstag der Anmeldung:
**26.01.2000 Patentblatt 2000/04**

(73) Patentinhaber: **Axiva GmbH**
**65926 Frankfurt (DE)**

(72) Erfinder:
• **SEITZ, Katharina**
**D-60596 Frankfurt (DE)**
• **SÜSSBRICH, Stephan**
**D-61462 Königstein (DE)**
• **HORNUNG, Michael**
**D-60326 Frankfurt (DE)**
• **KÜHN, Heinrich**
**D-65611 Brechen (DE)**
• **HILTMANN, Frank**
**D-65830 Kriftel (DE)**

(56) Entgegenhaltungen:
**US-A- 4 500 643**

• **PATENT ABSTRACTS OF JAPAN vol. 016, no. 349 (C-0967), 28.Juli 1992 & JP 04 103751 A (AGENCY OF IND SCIENCE & TECHNOL;OTHERS: 01), 6.April 1992,**
• **PATENT ABSTRACTS OF JAPAN vol. 014, no. 131 (C-0700), 13.März 1990 & JP 02 004952 A (TOCALO CO LTD), 9.Januar 1990,**
• **PATENT ABSTRACTS OF JAPAN vol. 014, no. 202 (C-0713), 25.April 1990 & JP 02 043352 A (TOCALO CO LTD), 13.Februar 1990,**

**Beschreibung**

Die vorliegende Erfindung bezieht sich auf einen Trägerkörper mit einer Beschichtung aus mindestens 95 Gew.-% Titanborid, der dadurch gekennzeichnet ist, daß die Beschichtung einen Sauerstoffgehalt kleiner oder gleich 1 Gew.-%, einen Gehalt an metallischen Verunreinigungen kleiner oder gleich 0,5 Gew.-% und einen spezifischen elektrischen Widerstand von kleiner oder gleich 10 $\mu\Omega \cdot$ m bei Raumtemperatur aufweist.

Es ist bekannt, daß Beschichtungen auf einem Trägerkörper oft dazu dienen, die Lebensdauer des Trägerkörpers in einer bestimmten Anwendung zu erhöhen, die Eigenschaften für eine bestimmte Anwendung zu verbessern und/oder neue Einsatzgebiete für das Trägermaterial zu erschließen. Mit Hilfe einer Beschichtung gelingt es, die Einsatzmöglichkeiten des Trägerkörpers zu verbessern und dessen Widerstandsfähigkeit zu erhöhen.

An diese Beschichtung werden besondere Anforderungen gestellt. Es ist bekannt, daß bei Bauteilen, die in verschiedenen technischen Gebieten eingesetzt werden, unterschiedliche, oft kombinierte Beanspruchungsarten auftreten können. Für den Einsatz in Metall- oder/und Salzschmelzen ist beispielsweise eine hohe Korrosionsbeständigkeit und Erosionsbeständigkeit notwendig. Ferner muß eine gute Adhäsion zum Bauteil und eine gute Kohäsion innerhalb des Beschichtungsverbundes gewährleistet sein. Weiterhin müssen die Schutzbeschichtungen geringe innere Druckspannungen, eine hohe Härte und Tragfähigkeit aufweisen. Darüber hinaus ist bei bestimmten Anwendungen der Bauteile ein geringer spezifischer elektrischer Widerstand der Schutzbeschichtung zu gewährleisten.

In DE-A-35 13 882 wird eine Schutzschicht offenbart, die aus einer auf dem Träger aufgebrachten Haftschicht, einer auf der Haftschicht aufgebrachten Zwischenschicht und einer auf der Zwischenschicht aufgebrachten Deckschicht besteht. Die Haftschicht entspricht in der Zusammensetzung im wesentlichen dem. Trägermaterial, damit der thermische Ausdehnungskoeffizient nicht stark abweicht. Die Zwischenschicht ist eine Mischung aus den Materialien der Haftschicht und der Deckschicht. Die Deckschicht kann unter anderem Titandiborid sein. Diese Schutzschicht soll das Trägermaterial gegen Korrosion, Oxidation, Abrasion, Erosion, chemische Angriffe und Strahlung schützen, es dabei elektrisch isolieren und durch Wärmedämmung kurzfristig vor dem Überhitzen bewahren.

Eine Schutzschicht gegen Hochtemperaturkorrosion wird in GB-A-1 104 840 für einen metallischen Körper aus Refraktärmetall wie z. B. Tantal, Wolfram oder Molybdän beschrieben. Die Schicht besteht aus einem Gemisch von 85 bis 99 Gew.-% Zirkonborid/Titanborid und 1 bis 15 Gew.-% Silicium. Bei der Auswahl der Materialien wurde berücksichtigt, daß die Wärmeausdehnungskoeffizienten von Substrat und Schicht vergleichbar sein müssen.

In US-A-5 368 938 wird Schutz vor Oxidation dadurch erzielt, daß die Oberfläche des Kohlenstoffkörpers speziell vorbehandelt wird, auf diese vorbehandelte Oberfläche eine Zwischenschicht und anschließend eine Deckschicht aufgebracht wird. Die Vorbehandlung des Kohlenstoffkörpers beinhaltet ein Ätzen der Oberfläche und eine anschließende Reaktion der erzeugten porösen Oberflächenschicht mit Boroxid. Es entsteht eine Borcarbidschicht mit einer Porosität von ca. 50 %. Die Porosität dieser Grundschicht ermöglicht der darüber aufgebrachten glasbildenden Zwischenschicht eine Verbindung mit dem Grundkörper. Auf diese Grundschicht wird dann eine Deckschicht aus Refraktärmaterialien aufgebracht. Die Schichten werden über CVD aufgetragen. Die aufwendige Untergrundbehandlung und das Aufbringen von Zwischenschichten dienen dazu, auftretende Risse in der äußeren Deckschicht abzudichten.

Dieser Zweck wird auch in US-A-5 536 574 verfolgt, nach der der Schutz vor Oxidation eines Kohlenstoffsubstrates über eine borhaltige SiC-Zwischenschicht und einer Deckschicht aus Glaskeramik bestehend aus $TiB_2$, kolloidalem $SiO_2$ und SiC erzielt werden soll. Der Auftrag der Schichten erfolgt dadurch, daß nacheinander die verschiedenen Materialien in Pastenform aufgebracht und anschließend gesintert werden.

Als Korrosionsschutz gegen flüssiges Aluminium wird in DE-A-23 05 281 eine Beschichtung oder eine Auflage aus geschmolzenem oder hochgesintertem dichtem feuerfestem Hartstoff auf einer Kathode oder einem Kathodenelement aus Kohlenstoff beschrieben. Als Hartstoff werden die Boride, Nitride, Carbide und Silicide von Übergangsmetallen der vierten bis sechsten Gruppe des Periodensystems bezeichnet. Neben dem Hartstoff ist noch ein geringer Anteil Kohlenstoff vorhanden, der ein binäres System bildet. Diese Schmelzbeschichtung kann entweder durch Erhitzen auf Temperaturen von 2200 bis 2300 °C erhalten werden, oder durch Plasmaspritzen.

Ferner ist mit DE-A-12 51 962 eine Kathode oder eine Kohlenstoffkathode mit einer Beschichtung bekannt, die aus einem Gemisch eines Hartstoffes wie Titanborid oder Titancarbid und wenigstens 5 % Kohlenstoff besteht. Diese Kathode wird bei Temperaturen von vorzugsweise 1600 bis 2000°C kalziniert.

Der vorstehend beschriebene Stand der Technik zeigt beispielhaft die Probleme auf, eine durchgehende, fugenfreie Beschichtung vorzugsweise aus Titanborid mit guter Haftung auf einen Trägerkörper aufzubringen, wenn verschiedene Wärmeausdehnungskoeffizienten zwischen der Beschichtung und dem Trägerkörper vorliegen. Die in GB-A-1 104 840 beschriebene Vorgehensweise, nur Materialien mit einem ähnlichen Ausdehnungskoeffizienten zu verwenden, bedeutet in der Praxis eine zu große Einschränkung in der Materialauswahl. Häufig werden zur Anpassung der verschiedenen Wärmeausdehnungskoeffizienten von Beschichtung und Trägerkörper Zwischenschichten aufgebracht, deren Material so gewählt werden muß, daß eine stufenweise Anpassung der Ausdehnungskoeffizienten zwischen Trägerkörper und Deckschicht erfolgt. Ein Nachteil dieser Vorgehensweise ist eine aufwendige Beschichtung, die relativ teuer wird und auch das Vorhandensein von geeigneten Materialien mit den richtigen Wärmeausdehnungskoeffizienten erfordert.

Um das Trägermaterial wirksam gegen das Außenmedium abzudichten, muß die Beschichtung so dicht sein, daß sie keine offenen Porenkanäle aufweist, die den Trägerkörper mit der außerhalb der Beschichtung befindlichen Umgebung verbinden. Dies bedeutet, daß die Beschichtung eine hinreichend geringe Porosität und eine gewisse Dicke aufweisen muß. Reines Titandiborid als hochschmelzender Werkstoff ($T_m$ bei etwa 2900°C) verdichtet beim Sintern sehr schlecht. Um eine Verdichtung bei besser erreichbaren Temperaturen zu erzielen, werden häufig Additive zur Absenkung der Sintertemperatur zugegeben. Titandiborid und Kohlenstoff zum Beispiel bilden ein binäres Eutektikum, bei dem die eutektische Temperatur bei der Zusammensetzung 85 % $TiB_2$ und 15 % C etwa 2287 °C beträgt. Unter dem gleichen Aspekt ist die Zugabe des niedrig schmelzenden Siliciums zu sehen, das die Sintertemperatur um mehr als 1000 °C senkt. Auch der Zusatz von anderen Metallen bzw. Legierungen wie z.B. Fe, Ni, Cr, Mo ergeben den selben Effekt. Mit Sauerstoff bildet sich ebenfalls eine sehr niedrig schmelzende borhaltige Phase (Glasphase). Die Zugabe von Additiven ist für die leichtere Verdichtung des Titandiborids von Vorteil, allerdings sinkt mit der Bildung von niedrigschmelzenden Zweitphasen in demselben Maße auch die Hochtemperaturbeständigkeit des Materials. Ein weiterer Nachteil der Zugabe von Additiven ist die Veränderung mehrerer Materialeigenschaften des Sinterkörpers wie z.B. des spezifischen elektrischen Widerstandes. Ein Sauerstoffgehalt von wenigen Gewichtsprozenten führt zu einer Erhöhung des spezifischen elektrischen Widerstandes um einen Faktor von 100 bis 1000. Vorzugsweise beträgt der Sauerstoffgehalt der Beschichtung weniger als 0,6, insbesondere weniger als 0,3 Gew.-%.

Die Bildung von glalsigen oder glaskeramischen Zwischenschichten erlaubt einen Ausgleich der Belastungen, die aufgrund der verschiedenen Wärmeausdehnungskoeffizienten beim Erhitzen entstehen, da diese amorphen Schichten relativ flexibel sind. Allerdings haben auch diese glaskeramischen Schichten den Nachteil, daß deren Hochtemperaturstabilität niedrig ist.

Die Beschichtungen, die man bis jetzt kennt, zeigen meist eine geringe Haftung am Trägerkörper, besonders bei höheren Temperaturen wie z.B. bei 900°C, wenn in alternierenden Zyklen geheizt und gekühlt wird. Häufig bilden sich Risse, und die Beschichtung beginnt sich abzulösen. Manche Beschichtungszusammensetzungen, wie auch deren Herstellverfahren sind sehr komplex und deshalb ökonomisch uninteressant.

Der Erfindung lag die Aufgabe zugrunde, einen Trägerkörper mit einer fugenfreien Beschichtung hauptsächlich aus Titanborid bereitzustellen, die den Trägerkörper bei hohen Temperaturen gleichzeitig gegen die Korrosion durch flüssige Metalle, z.B. gegen das Eindringen von Aluminium oder/und Natrium aus Aluminium oder/und Natrium bzw. deren Verbindungen enthaltenden Schmelzen, und gegen Erosion wirksam schützen kann, die eine hohe Haftung auf dem Trägerkörper, insbesondere auf einem Trägerkörper aus Kohlenstoff und/oder Graphit, aufweist, und die dabei elektrisch mindestens so leitfähig ist wie das Trägermaterial. Für einen besonderen Anwendungsfall soll die Beschichtung der Schmelze einer Aluminiumschmelzflußelektrolysezelle bei Betriebsbedingungen mindestens ein Jahr widerstehen können.

Die Aufgabe wird gelöst mit einem Trägerkörper, der eine Beschichtung aus mindestens 95 Gew.-% Titanborid trägt, die dadurch gekennzeichnet ist, daß die Beschichtung einen Sauerstoffgehalt kleiner oder gleich 1 Gew.-%, einen Gehalt an metallischen Verunreinigungen kleiner oder gleich 0,5 Gew.-% und einen spezifischen elektrischen Widerstand von kleiner oder gleich 10 $\mu\Omega \cdot$ m bei Raumtemperatur aufweist.

Titanborid ist ein grundsätzlich geeignetes Material für Beschichtungen von Trägerkörpern, die gegen chemische Korrosion durch Metallschmelzen bei hohen Temperaturen und gegen Erosion geschützt werden sollen. Aufgrund der Aggressivität von Metallschmelzen bei hohen Betriebstemperaturen sollte das Titanborid vorzugsweise sehr rein und dabei nahezu frei von oxidischen Phasen und löslichen, metallischen Verunreinigungen sein, da diese von der Metallschmelze herausgelöst werden können, wodurch das Gefüge durch Ausbrechen von Körnern instabil wird. Die erfindungsgemäßen Eigenschaften der Beschichtung können am besten dadurch erzielt werden, daß die Beschichtung durch Plasmaspritzen hergestellt wird. Allerdings verändert sich bei reaktiven Spritzpulvern, wie z.B. $TiB_2$, die chemische Zusammensetzung der daraus hergestellten Spritzbeschichtung. Luftsauerstoff kann in die Plasmaflamme diffundieren und zu einer Oxidation des reaktiven Spritzpulvers und folglich auch zu geänderten Eigenschaften der Beschichtung führen wie z.B. chemische Stabilität und elektrischer Widerstand. Deshalb wird die erfindungsgemäße Beschichtung in einer weitgehend oder gänzlich Sauerstoff-freien Atmosphäre aufgebracht. Vorzugsweise sind die metallischen Verunreinigungen ≤ 0,35 Gew.-%, besonders bevorzugt ≤ 0,2 Gew.-%, insbesondere ≤ 0,12 Gew.-%. Bei dem erfindungsgemäßen Verfahren wird dem Spritzpulver kein metallisches Pulver zugesetzt.

Bei einem Sauerstoffgehalt kleiner oder gleich 1 Gew.-% ist der spezifische elektrische Widerstand der Beschichtung in der Regel kleiner oder gleich 10 $\mu\Omega \cdot$ m bei Raumtemperatur, bevorzugt kleiner ≤ 5 $\mu\Omega \cdot$ m. Für die erfindungsgemäße Beschichtung ist es wichtig, eine geeignete Spritzpulverpartikelgrößenverteilung auszuwählen. Durch zu große Spritzpulverpartikel entsteht eine sehr poröse Beschichtung mit einem höheren spezifischen elektrischen Widerstand. Je kleiner die Partikel sind, desto geringer ist der spezifische elektrische Widerstand. Jedoch gilt dies nur bis zu einer gewissen Grenze. Der spezifische elektrische Widerstand von $TiB_2$-Einkristallen liegt zwischen 0,066 und 0,09 $\mu\Omega \cdot$ m und dabei unterhalb dieser Grenze. Bei weiterer Verringerung der Partikelgröße, steigt der Widerstand wieder an. Dieser Anstieg des Widerstandes wird verursacht durch den höheren Anteil an Sauerstoff in feineren Pulvern.

Ebenso kann es wichtig sein, daß beim Aufbringen der Beschichtung auf die Trägerkörperoberfläche keine Reaktion des Trägerkörpermaterials mit Titanborid stattfindet. Die sich dadurch ausbildende Zwischenschicht könnte in den Metallschmelzen löslich sein oder einen deutlich höheren spezifischen elektrischen Widerstand besitzen, der als elektrische Sperrschicht wirkt.

Besitzen die Titanborid-Beschichtung und der Trägerkörper deutlich unterschiedliche Wärmeausdehnungskoeffizienten, kann dies bei thermischen Belastungen, z.B. bei Temperaturen bis zu 950 °C, leicht zur Abplatzung der Beschichtung führen, wenn die Beschichtung vollständig dicht ist. Da die Aufbringung von mehreren Einzelschichten mit unterschiedlichen Eigenschaften übereinander, um die Wärmeausdehnungskoeffizienten des Trägerkörpers an die der Beschichtung schrittweise anzugleichen, unwirtschaftlich ist, ist eine Titanborid-Beschichtung vorteilhaft mit einer Porosität von vorzugsweise maximal 10 Vol.-%, insbesondere von 4 bis 7 Vol.-%, und mit einem speziellen Gefüge, das einen Ausgleich der mechanischen Spannungen in der Beschichtung ermöglicht: Die Beschichtung weist vorzugsweise ein Gefüge auf, das bei einem Querschliff (Anschliff senkrecht durch die Beschichtung für die Beobachtung unter dem Auflichtmikroskop oder Rasterelektronenmikroskop) ein lamellenartiges Gefüge mit einem durchschnittlichen Verhältnis von Lamellenlänge zu Lamellenhöhe im Querschliff im Bereich von 1,5 : 1 bis 10 : 1 zeigt; die einzelnen Lamellen stellen Querschnitte durch die Spritzflecke dar, die beim Aufprallen der einzelnen aufgeschmolzenen Spritzpulverpartikel ausgebildet werden und durch Ätzen mit kochender 30 %-iger Flußsäure über ca. 5 Minuten gut sichtbar werden. Bei der erfindungsgemäßen Beschichtung ist es von Vorteil, wenn die $TiB_2$-Partikel weitgehend oder gänzlich durchgeschmolzen sind. Dies empfiehlt sich, da ohne niedrigschmelzende, z.B. metallische oder oxidische Binderphasen, eine Verfestigung der Beschichtung schwierig ist.

Die Haftung der erfindungsgemäßen fugenfreien Titanborid-Beschichtung auf dem Trägerkörper aus Kohlenstoff oder/und Graphit ist so hoch, daß bei einer Beanspruchung der Beschichtung z.B. durch Schlag oder Stoß ein entstehender Riß, soweit er im wesentlichen parallel zur Beschichtungsoberfläche verläuft, nicht mitten durch die Beschichtung und nicht durch die Grenzfläche zwischen Beschichtung und Trägerkörper läuft, sondern im Trägerkörper. Die Gleichmäßigkeit des Gefüges ist aufgrund der Gleichmäßigkeit des Spritzpulvers und der Verfahrensbedingungen gewährleistet. Ebenso ergab die Messung der Haftzugfestigkeit nach DIN 50160, daß die Zugproben fast ausschließlich im Trägerkörper aus Kohlenstoff bzw. Graphit versagten.

Die Beschichtung des Trägerkörpers erfolgt vorteilhaft unter Betriebsparametern des Plasmabrenners, bei einem Beschichtungskammerdruckniveau und mit einer geeigneten Spritzpulverpartikelgröße, so daß eine Porosität von maximal 10 Vol.-%, insbesondere von 4 bis 7 Vol.-% erzeugt wird. Die Porosität und die Dicke der Beschichtung liegen vorteilhaft in einem Bereich, in dem die Beschichtung keine Porenkanäle aufweist, die den Trägerkörper mit der Umgebung außerhalb der Beschichtung verbinden. Die Schichtdicke der Titandiboridschicht liegt bevorzugt bei 0,1 bis 1 mm, auch wenn grundsätzlich dickere Schichten hergestellt werden können. In diesem Dickenbereich ist die Abplatzungsgefahr bei sehr starken Temperaturschwankungen besonders gering. Die Dichtheit einer fugenfreien Beschichtung mit einer Schichtdicke von 0,1 bis 1 mm, welche für das hochschmelzende Titandiborid mit einem Schmelzpunkt über 2900 °C bevorzugt durch ein kontrolliertes Inertgasplasmaspritzverfahren erzielt werden kann, ist eine Voraussetzung dafür, daß die Beschichtung den Betriebsbedingungen in einer Aluminiumschmelzfluß-elektrolysezelle länger als ein Jahr widersteht. Durchgehende fugenfreie Beschichtungen sind für korrosive Belastungen zu bevorzugen.

Die Funktionsfähigkeit der auf die Oberfläche von Kohlenstoff- und/oder Graphitkörpern aufgetragenen Beschichtung wird vor allem auch durch die Haftfestigkeit der Beschichtung bestimmt. Die erfindungsgemäße Beschichtung hat auf einem Trägerkörper aus Kohlenstoff oder/und Graphit, insbesondere graphitiertem Kohlenstoff, eine hohe Haftung: Die Haftfestigkeit der Beschichtung ist höher als die Festigkeit des Materials des Trägerkörpers. Die hervorragende Haftung wird durch das Aufbringen von geschmolzenen Pulverpartikeln unter reduziertem Druck mit hoher Geschwindigkeit erzielt, die eine mechanische Verankerung mit der Oberfläche bewirken. Es ist günstig, die Beschichtung direkt ohne Zwischenschicht auf die leicht angerauhte Oberfläche der Kohlenstoffkörper aufzubringen, wie sie bei der normalen Bearbeitung z.B. durch Fräsen oder Spanen anfällt. Die Trägerkörper müssen zur Beschichtung sauber und trocken sein.

In den Trägerkörper aus Kohlenstoff bzw. Graphit sollte beim Einsatz in einer Elektrolyt- oder/und Metallschmelze möglichst wenig Metall- und Elektrolytschmelze eindringen können. Das bei der Aluminiumschmelzflußelektrolyse durch eine Nebenreaktion gebildete Natrium bildet mit Graphit bzw. Kohlenstoff Intercalationsverbindungen, die zu einer Volumenzunahme führen können. Die durch die Volumenzunahme verursachte Ausdehnung führt zu einer Verbiegung und Verwölbung der Kohlenstoffkathodenelemente in der Aluminiumschmelzflußelektrolysezelle. Mit dem sog. Rapoport-Test wird die Ausdehnung des Kohlenstoffmaterials, verursacht durch das Eindringen von Natrium in Kohlenstoff, bestimmt.

Die mechanische Erosionsbeständigkeit einer Beschichtung läßt sich mit einer speziell an die Verschleißbedingungen im Einsatz angepaßten Methode ermitteln: Kohlenstoff und insbesondere graphitierter Kohlenstoff wird, da er relativ weich ist, durch nicht-aufgelöstes Aluminiumoxid, das sich im Laufe der Betriebsdauer auf der Oberfläche der Kohlenstoffkathodenelemente am Boden der Aluminiumschmelzfluß-elektrolysezelle sammelt, abgerieben. Unbeschichtete Kathodenelemente zeigen eine Erosion etwa von 5 bis 10 mm pro Jahr. Diese Beanspruchung kann durch die Messung der Erosionsbeständigkeit nach der Methode von Liao et al. (X. Liao, H. Oye, Carbon, Vol. 34(5), 1996, 649-661) simuliert werden. Die erfindungsgemäße Beschichtung soll bei einem sechsstündigen Test in einem $Al_2O_3$-Schlicker nach Liao et al. keine oder nur eine geringe Erosion aufweisen, so daß eine beschichtete Probe im Vergleich zu einer unbeschichteten Probe ein Abtragsverhältnis von höchstens 1 : 2 aufweist.

In der Titanborid-Beschichtung können bevorzugt bis zu 5 Gew.-% Boride, Carbide, Nitride oder/und Silicide der Zusammensetzung $M_xB_y$ vorhanden sein, wobei $M_x$ für Gehalte der Übergangsmetalle der 4., 5. oder/und 6. Gruppe des Periodensystems bzw. für Aluminium und $B_y$ für den Borid-, Carbid-, Nitrid- oder/und Silicidgehalt steht. Besonders bevorzugt sind Zirkonborid und Aluminiumborid. Bevorzugte Gehalte sind 1 bis 2 Gew.-%.

Die erfindungsgemäße Beschichtung von beliebig geformten Trägerkörpern ist besonders vorteilhaft für die Beschichtung von großflächigen Kohlenstoff- und/oder Graphitkörpern, die als Elektroden für die Aluminiumschmelzflußelektrolyse Verwendung finden. Bei derartigen Kathodenelementen wird üblicherweise nur eine Fläche des Elements beschichtet, die der Anode zugewandt ist, ggbfs. zusätzlich noch ein Randbereich über die Kanten dieser beschichteten Fläche hinaus. Die Beschichtung kann auf Körpern aus gebranntem, nicht graphitiertem Kohlenstoff - das sind Körper, die bei ihrer Herstellung auf eine Temperatur von mindestens 750 °C und auf nicht mehr als 1400 °C erhitzt worden sind - genauso aufgebracht werden wie auf Körper aus Elektrographit - das sind Körper, die bei ihrer Herstellung auf eine Temperatur von mindestens 1600 °C, vorzugsweise auf Temperaturen von 2400 bis 3000 °C erhitzt worden sind. Ebenso kann die erfindungsgemäße Beschichtung auf Trägerkörper aus Stahl, anderen Metallen oder Legierungen, Refraktärmetallen, Verbundwerkstoffen oder Keramik aufgebracht werden. Für viele Anwendungen ist es wichtig, daß die Oberfläche eines Trägerkörpers geschützt ist gegen den Angriff von chemisch aggressiven Medien bei hohen Temperaturen, gegen Abrasion, Erosion oder/und Oxidation.

Erfindungsgemäß beschichtete Trägerkörper können als Elektroden, insbesondere als Kathodenelemente in der Aluminiumschmelzflußelektrolyse, als Heizelemente u.a. für elektrisch beheizte Öfen, als feuerfeste Auskleidungen, als verschleißfeste Elemente oder als Behälter, insbesondere als Tiegel, als Elemente in Wärmetauschern oder Kernreaktoren, als Düsen, Verdampferschiffchen und Hitzeschilde eingesetzt werden.

Beispiele:

Beispiel 1:

Herstellung der Beschichtung:

Die Herstellung der erfindungsgemäßen Beschichtung erfolgte auf Trägerkörpern aus Kohlenstoff bzw. Graphit der Sorten "5BDN", "5BGN" und "BN" des Herstellers SGL CARBON AG mittels Plasmaspritzen in einer inerten Atmosphäre unter leicht reduziertem Druck. Zur Beschichtung wurde der Trägerkörper in eine Vakuumbeschichtungskammer eingebracht. Der Plasmabrenner war eine Spezialanfertigung der Medicoat AG mit einer Brennerleistung von 50 kW, mit einer speziell für die bevorzugten Spritzpulver und Verfahrensbedingungen entwickelten Düsengeometrie und mit einer erhöhten Kühlleistung. Er war in x,y,z-Richtung verfahrbar. Die Kammer wurde erst auf einen Restdruck von etwa $10^{-2}$ mbar evakuiert und dann mit Argon auf den gewünschten Arbeitsdruck vorzugsweise im Bereich von 700 bis 950 mbar geflutet. Nach dem Zünden des Plasmabrenners wurde die Bogenspannung bei 60 bis 78 V gehalten. In die Plasmaflamme wurde ein Spritzpulver mit mindestens 95 Gew.-% $TiB_2$ und von einer mittleren Korngröße im Bereich von 10 bis 55 µm, vorzugsweise im Bereich von 20 bis 30 µm, eingebracht. Das Spritzpulver konnte ein homogenes Gemisch aus verschiedenen Pulverqualitäten sein. Das Spritzpulver und die Spritzbedingungen wurden so gewählt, daß die Beschichtung einen Sauerstoffgehalt von kleiner oder gleich 1 Gew.-% aufwies. Ggbfs. mußte das zu wählende Spritzpulver hierfür einen gewissen Kohlenstoffgehalt zeigen, um einen erhöhten Sauerstoffgehalt beim Spritzvorgang abzubauen. Die aufgeschmolzenen Pulverpartikel wurden auf der Trägerkörperoberfläche abgeschieden, die etwa 60 bis 100 mm von der Plasmadüse entfernt war. Bei einer Leistung von 45 bis 60 kW und bei einem Plasmagasfluß von ca. 55 l/min betrug der Pulverdurchsatz mindestens 30 g Pulver pro Minute. Das Spritzpulver wurde mit Hilfe von Argon als Trägergas in die Flamme eingeblasen. Der Plasmabrenner rasterte die Oberfläche zeilenweise ab. Die Bewegungsgeschwindigkeit und der Abstand zwischen den einzelnen Zeilen wurden so eingestellt, daß die gewünschte Schichtdicke in vorzugsweise einer, höchstens in zwei Passagen erreicht wurde. Es wurden bevorzugt Schichtdicken von insgesamt 0,1 mm bis 1 mm aufgetragen. Die Temperatur des Trägerkörpers konnte beim Beschichten zwischen 100 und 400 °C betragen.

Rapoport-Test:

Eine Kohlenstoffkathode in der Aluminiumschmelzflußelektrolyse ist im praktischen Betrieb einer starken chemischen Korrosions- und Erosionsbelastung ausgesetzt. Zur Ermittlung der Korrosionswirkung von Schmelzen in Aluminiumschmelzflußelektrolysezellen an unterschiedlichen Titanborid-Beschichtungen wurden Versuche an beschichteten Rapoport-Probekörpern ausgeführt. Für den Rapoport-Test wurde eine sog. Rapoport-Testapparatur des Herstellers R & D Carbon Ltd., Sierre/Schweiz, verwendet, und es wurde nach Arbeitsvorschrift verfahren. Die zu prüfenden Materialproben in Form von Zylindern aus den Sorten "5BDN", "5BGN" und "BN" wurden durch Bohren und anschließende spanende Oberflächenbearbeitung hergestellt und allseitig beschichtet. Die Beschichtung wurde mit einer Dicke von etwa 0,3 µm und - soweit es die Proben der Tabelle I betrifft - einer mittleren Porosität von etwa 6 Vol.-% auf Probekörper der Sorte "5BDN", "5BGN" und "BN" aufgebracht. Ein Graphittiegel wurde mit einer beschichteten Probe und einem Elektrolysebadgemisch gefüllt und in den Ofen eingebaut. Der Graphittiegel wurde als Anode geschaltet. Die Probe wurde mit einem hydraulischen Druck von 5 MPa gegen einen wärmebeständigen Stahlstab gepreßt, der die Kathode bildete. Die Proben wurden vier Stunden auf Arbeitstemperatur vorgeheizt und anschließend mit einem Argondurchfluß von 100 l/h bei 980 °C zwei Stunden elektrolysiert. Das bei diesem Test verwendete Badgemisch hatte folgende Zusammensetzung: 71,5 Gew.-% $Na_3AlF_6$; 5,0 Gew.-% $CaF_2$; 14,5 Gew.-% NaF; 9,0 Gew.-% $Al_2O_3$. Die Korngrößen des Badgemisches vor dem Aufschmelzen waren kleiner als 4 mm; das Badgewicht betrug 765 g.

Probengröße: Zylinder mit Durchmesser 30 mm +/- 0,1 mm und Länge 100 mm +/- 0,2 mm. Durchmesser des Graphittiegels: 90 mm; Höhe: 90 mm; eingetauchte Probenlänge: 60 mm. Stromdichte: 0,7 A/cm². Arbeitstemperatur: 980 °C +/- 2°C. Rohrofen: 160 mm Durchmesser, 400 mm aktive Länge. Die Dehnungsänderung während der Elektrolyse wurde folgendermaßen berechnet:

$$\text{Ausdehnung} = \frac{\Delta L_{max} \text{ (mm)}}{60 \text{ (mm)}} \times 100 \text{ (\%)}.$$

Die erfindungsgemäß beschichteten Trägerkörper zeigten bei dem Rapoport-Test keine oder nahezu keine ($\leq 0,2$ %) lineare Ausdehnungsänderung. Unbeschichtete Trägerkörper aus dem Material der Sorte "5BDN" wiesen eine durchschnittliche Ausdehnungsänderung von 0,5 bis 0,6 % bei dem Rapoport-Test auf. Daraus wurde geschlossen, daß die erfindungsgemäßen Beschichtungen keine durchgehenden Poren hatten und einen wirksamen Schutz gegen das Eindringen von Natrium darstellten.

Bestimmung der Erosionsbeständigkeit:

Der für die Bestimmung der Erosionsbeständigkeit nach Liao et. al. verwendete Schlicker wurde folgendermaßen hergestellt: 950 ml "schwere Flüssigkeit" mit einer Dichte von 2,65 - 2,70 g/cm³, bestehend aus destilliertem Wasser und Natriumpolywolframat $Na_6H_2W_{12}O_{40}$, wurde unter Zugabe von 1282,5 g $Al_2O_3$ 15 Minuten lang gerührt. Bei dem $Al_2O_3$ handelte es sich um sogenanntes primäres $Al_2O_3$ mit einer Dichte von 3,58 g/cm³, einem $\alpha$-$Al_2O_3$-Gehalt von 18 % und einer spezifischen Oberfläche von 59 m²/g. Die Partikelgrößenverteilung sah folgendermaßen aus: > 180 µm: 0,2 Gew.-%; 180 -125 µm: 8,3 Gew.-%; 125 - 90 µm: 38,5 Gew.-%; 90 - 63 µm: 40,2 Gew.-%; 63 - 45 µm: 7,9 Gew.-%; < 45 µm: 4,9 Gew.-%. Die Probekörper waren Stäbe mit einer Länge von 60 mm und einem Durchmesser von 10 mm. Die allseitig beschichteten Proben tauchten 42 mm in den Schlicker ein. Die Proben wurden mit einer Geschwindigkeit von 1,5 m/sec im Schlicker rotierend bewegt. Nach der Hälfte der Testzeit wurden die Proben um 180° gedreht, so daß die Vorder- und Rückseite entsprechend beansprucht wurden. Die gesamte Testdauer betrug 6 Stunden pro Probe. Die Erosion wurde über eine Auftriebsmessung bestimmt. Bei der Messung der Erosionsbeständigkeit ist es üblich, den Abrieb des getesteten Materials im Vergleich zu einem Standardmaterial oder in einem relativen Vergleich unter den gemessenen Proben anzugeben. Die Reihenfolge der unbeschichteten Kohlenstoffkörper bezogen auf die Meßwerte der Erosionsbeständigkeit war:

5BDN >> 5BGN > BN.

Die Erosionsbeständigkeit der beschichteten Trägerkörper der drei Trägermaterialien war im Rahmen der Meßgenauigkeit in etwa gleich. Im Vergleich zu den unbeschichteten Kohlenstoffkörpern erhöhte sich die Erosionsbeständigkeit auf mindestens das Doppelte ("5BDN") bzw. Achtfache ("BN").

Bestimmung des spezifischen elektrischen Widerstandes:

Der spezifische elektrische Widerstand von dünnen Beschichtungen ist nicht exakt und nicht einfach zu bestimmen. Bei diesen Versuchen wurde mit einer selbstgebauten Meßvorrichtung gearbeitet. Der elektrische Widerstand der Beschichtung wurde gemessen, indem ein Gleichstrom von 10 A durch die Probe geschickt wurde und der Spannungsabfall über eine Strecke von 40 mm mittels eines Potentiometers gemessen wurde. Aus vier Einzelmessungen wurde der Mittelwert gebildet und der spezifische elektrische Widerstand errechnet. Es wurde der elektrische Widerstand eines jeden Trägerkörpers vor und nach der Beschichtung ermittelt. Bei dieser Meßmethode hat der Widerstand des Trägerkörpermaterials Einfluß auf den Meßwert des elektrischen Widerstandes der Beschichtung und kann dabei nicht korrigiert werden. Bei allen Trägerkörpern aus Kohlenstoff bzw. Graphit zeigten die beschichteten Proben einen um 5 bis 50 % geringeren spezifischen elektrischen Widerstand als die unbeschichteten Proben.

Versuchsergebnisse im Überblick:

Tabelle I:

| Einfluß des Sauerstoffgehaltes der Titanborid-Beschichtung auf den spezifischen elektrischen Widerstand und die Korrosionsstabilität bei Trägerkörpern am Beispiel der Sorte "BN" | | | | | | | |
|---|---|---|---|---|---|---|---|
| Versuch | 1 | 2 | 3 | 4 | 5 | 6 | 7 |
| Sauerstoffgehalt (Gew.-%) | <0,1 | 0,2 | 0,4 | 0,5 | 0,6 | 0,8 | 1,0 |
| spez. el. Widerstand ($\mu\Omega\cdot m$) | <0,2 | <0,2 | 2 | 4 | 6 | 7 | 9 |
| Korrosionswirkung * | keine | keine | kaum merklich | leicht | deutlich eindringend | deutliche Korrosion | starke Korrosion |

* Veränderung der Beschichtung an Proben des Rapoport-Tests: Angriff an Komgrenzen durch die Aluminiumschmelze

Aus Tabelle I ergibt sich, daß der Sauerstoffgehalt der Titanborid-Beschichtung für die Anwendung in einer Aluminiumschmelzflußelektrolysezelle sehr niedrig sein sollte, vorzugsweise $\leq 0,2$ Gew.-%. Für andere Anwendungen, die keine korrosive Beanspruchung beinhalten, kann der Sauerstoffgehalt weitaus höher als 0,2 Gew.-% sein.

Tabelle II:

| Einfluß der Gefügestruktur und der Porosität der Titanborid-Beschichtung auf die Erosionsstabilität, die Haftung und das lineare Wärmeausdehnungsverhalten auf Trägerkörpern am Beispiel der Sorte "5BDN" | | | | | | |
|---|---|---|---|---|---|---|
| Versuch | 1 | 2 | 3 | 4 | 5 | 6 |
| Verhältnis Lamellenlänge zu Lamellenhöhe | 1 : 1 | 1,5 : 1 | 4 : 1 | 8 : 1 | 10 : 1 | 12 : 1 |
| Porosität (Vol.-%) | 13 | 10 | 7 | 4 | 5,5 | 9 |
| Verhältnis Abtrag beschichtet zu unbeschichtet + | 1 : 1,2 | 1 : 2 | 1 : 4 | 1 : 8 | 1 : 3 | 1 : 1,5 |
| Haftung | schlecht, Abplatzen | i.O. | i.O. | i.O. | i.O. | i.O. |
| Ausdehnung (%)* | 0,45 | 0,15 | <0,1 | <0,1 | <0,1 | 0,2 |

i.O. = in Ordnung

* Erosions-Test

* Ergebnisse des Rapoport-Tests

Durch ein Kohlenstoffkathodenelement mit einer erfindungsgemäßen Beschichtung, die bei einem Sauerstoffgehalt < 0,2 Gew.-% im wesentlichen aus 99,8 Gew.-% Titanborid bestand und die eine Porosität von 4 bis 7 Vol.-

% und eine Schichtdicke von 0,3 mm bis 0,5 mm aufwies, wurde der korrosive und erosive Angriff stark vermindert. Hierdurch konnte aufgrund der hohen elektrischen Leitfähigkeit (spezifischer elektrischer Widerstand kleiner 1 μΩ · m) und der Benetzbarkeit durch flüssiges Aluminiummetall Energie bei der Herstellung von Aluminium durch Verringerung der Zellenspannung eingespart werden. Die lamellenartige Gefügestruktur der erfindungsgemäßen Beschichtung führte zu einer guten Haftung und zu einem Abbau mechanischer Spannungen in der Beschichtung. Diese Beschichtung war beim Einsatz des Trägerkörpers als Kathodenelement in einer Metallschmelze zur elektrolytischen Herstellung von Aluminium gegen diese Metallschmelze länger als ein Jahr beständig.

Beispiel 2

Die Verwendung von Graphit als Werkstoff für Industrieöfen war bisher wegen der Oxidation dieser Materialien auf Schutzgas- und Vakuumanlagen beschränkt. Aber auch unter den Bedingungen dieser Anlagen treten verschiedene Wechselwirkungen zwischen Atmosphäre und Graphit auf. Eine der Domänen der Graphitmaterialien ist der Bereich der Hochtemperaturtechnik mit Arbeitstemperaturen oberhalb 1800 °C, z. B. für die Herstellung technischer Keramiken.

Es wurde ein Graphitheizelement, das mit einer Titanborid-Beschichtung entsprechend Beispiel 1 versehen worden war, zum Sintern von empfindlichen Hochleistungskeramiken, wie u.a. AIN, verwendet. Die Abschirmung der kohlenstoffhaltigen Ofenatmosphäre des durch Graphitelemente beheizten Ofenraumes gegenüber dem Sintergut war notwendig, da Kohlenstoff eine gewisse Löslichkeit in der Keramik hat. Die Anforderungen an die Beschichtung waren in diesem Fall eine Beschichtung mit einer Porosität ≤ 5 Vol.-% und mit einer sehr guten Haftung, die auch bei häufigen Temperaturwechseln und bei Temperaturen von bis zu 2200 °C in Stickstoff oder Vakuum eingesetzt werden kann. Da das Heizelement direkt elektrisch beheizt wurde, war es sinnvoll, eine Beschichtung mit einer guten elektrischen Leitfähigkeit auszuwählen. Die mit im wesentlichen Titanborid beschichteten Heizelemente ersparten die Sintertiegel, in die das Sintergut sonst zur Abschirmung der Ofenatmosphäre gesetzt werden mußte. Neben der Ersparnis der teuren Sintertiegel konnte auch der vorhandene Ofenraum weit effektiver genutzt werden. Da kein überflüssiges Material mit aufgeheizt werden mußte, wurden beim Sintern große Energieeinsparungen erzielt. Der Einsatz derartiger elektrisch beheizter Öfen bot die Möglichkeit, den Energieeintrag ohne Beeinflussung der Ofenatmosphäre mit hoher Präzision vorzunehmen.

Durch den Einsatz von beschichteten Heizelementen in Öfen, wie sie für in-situ-Untersuchungen von Sintervorgängen (R. Hofmann et. al.: Neuentwicklung einer Thermooptischen Meßanlage zur in-situ Untersuchung von Sintervorgängen, Tagungsband zur Werkstoffwoche 1996, Stuttgart 1996) verwendet werden, wurden Untersuchungen durch optische Meßmethoden an Sinterproben zugänglich, die sonst mit Kohlenstoff-haltiger Ofenatmosphäre reagieren würden.

Beispiel 3

Des weiteren eignet sich eine Titanborid-Beschichtung für Bauteile, die in Kontakt mit Schmelzen stehen. Die erfindungsgemäße Beschichtung mit 99 Gew.-% Titanborid, hergestellt entsprechend Beispiel 1, war weitestgehend beständig gegen Schmelzen von Al, Cu, Mg, Sn, Bi, Zn und Pb. Deshalb konnten metallurgische Tiegel, die im wesentlichen mit Titanborid beschichtet waren, für derartige Schmelzen mit einer vielfach längeren Lebensdauer eingesetzt werden.

Beispiel 4

Durch PVD (physical vapor deposition) erzeugte Beschichtungen können vor allem in der Optik, Optoelektronik und Elektronik, zur Dekoration (Schmuckzwecke) und zum Verschleißschutz eingesetzt werden. Dafür werden Verdampferschiffchen oder -tiegel benötigt, um das geschmolzene Metall bereitzustellen. Da die Schmelze für längere Zeit in Kontakt mit dem Behälter steht, muß ein chemisch inertes, thermisch stabiles, hochvakuumbeständiges Material verwendet werden, das eine gute Wärmeleitung und hohe Temperaturwechsel-beständigkeit aufweist. Für Verdampferschiffchen und -tiegel, die üblicherweise aus einem Verbundmaterial aus Titanborid, Bornitrid und/oder Aluminiumnitrid oder einem Verbundmaterial aus Bornitrid zusammen mit Wolfram oder Molybdän oder/und Chrom gefertigt werden, kann Graphit als Trägerkörper mit einer Beschichtung aus im wesentlichen Titanborid eingesetzt werden. Zum Aufdampfen von dünnen Beschichtungen mittels PVD wurde das Schichtmaterial mit einem Titanborid-Gehalt von 96 Gew.-% in einem Tiegel im Hochvakuum erhitzt, bis es verdampfte und sich auf dem vergleichsweise kalten Substrat niederschlug. Das Beheizen des Tiegels erfolgte durch direkten Stromdurchgang. Die erfindungsgemäßen Körper hatten sich hierbei genauso bewährt wie die weitaus teureren, aufwendig aus Vollmaterial hergestellten Komponenten aus Verbundmaterial. Ein wesentlicher Vorteil von beschichteten Behältern gegenüber unbeschichteten Behältern aus Vollmaterial ist, daß auf eine einfache Weise eine größere Formen- und Größenvielfalt genutzt werden kann, wenn ein leicht herzustellender und zu bearbeitender Grundkörperwerkstoff verwendet werden kann.

**Patentansprüche**

1. Trägerkörper mit einer Beschichtung aus mindestens 95 Gew.-% Titanborid, **dadurch gekennzeichnet, daß** die Beschichtung einen Sauerstoffgehalt kleiner oder gleich 1 Gew.-%, einen Gehalt an metallischen Verunreinigungen kleiner oder gleich 0,5 Gew.-% und einen spezifischen elektrischen Widerstand von kleiner oder gleich 10 μΩ · m bei Raumtemperatur aufweist.

2. Trägerkörper nach Anspruch 1, **dadurch gekennzeichnet, daß** die Beschichtung ein lamellenartiges Gefüge mit einem durchschnittlichen Verhältnis von Lamellenlänge zu Lamellenhöhe im Querschliff im Bereich von 1,5 : 1 bis 10 : 1 aufweist.

3. Trägerkörper nach Anspruch 1 und/oder 2, **dadurch gekennzeichnet, daß** die Beschichtung eine Porosität von maximal 10 Vol.-%, insbesondere von 4 bis 7 Vol.-% aufweist.

4. Trägerkörper nach einem oder mehreren der Ansprüche 1 bis 3, **dadurch gekennzeichnet, daß** die Beschichtung keine Porenkanäle aufweist, die den Trägerkörper mit der außerhalb der Beschichtung befindlichen Umgebung verbinden.

5. Trägerkörper nach einem oder mehreren der Ansprüche 1 bis 4, **dadurch gekennzeichnet, daß** die Beschichtung bei einer Schaltung des Trägerkörpers als Kathodenelement in einer Salzschmelze zur elektrolytischen Herstellung von Aluminium gegen diese Salzschmelze mindestens ein Jahr lang beständig ist.

6. Trägerkörper nach einem oder mehreren der Ansprüche 1 bis 5, **dadurch gekennzeichnet, daß** die Beschichtung auf Trägerkörpern aus Kohlenstoff oder/und Graphit, insbesondere graphitiertem Kohlenstoff, eine hohe Haftung aufweist.

7. Trägerkörper nach einem oder mehreren der Ansprüche 1 bis 6, **dadurch gekennzeichnet, daß** die Haftfestigkeit der Beschichtung auf einem Trägerkörper aus Kohlenstoff oder/und Graphit höher ist als die Festigkeit des Materials des Trägerkörpers.

8. Trägerkörper nach einem oder mehreren der Ansprüche 1 bis 7, **dadurch gekennzeichnet, daß** der Trägerkörper Kohlenstoff oder/und Graphit enthält, wobei die Beschichtung ggbfs. bei einem Rapoport-Test keine oder eine lineare Wärmeausdehnungsänderung $\leq$ 0,2 % aufweist.

9. Trägerkörper nach einem oder mehreren der Ansprüche 1 bis 8, **dadurch gekennzeichnet, daß** die Beschichtung keine oder nur eine geringe Erosion bei einem sechsstündigen Erosionsbeständigkeitstest in einem $Al_2O_3$-Schlicker nach Liao et al. aufweist, so daß eine beschichtete Probe im Vergleich zu einer unbeschichteten Probe ein Abtragsverhältnis von höchstens 1 : 2 aufweist.

10. Trägerkörper nach einem oder mehreren der Ansprüche 1 bis 9, **dadurch gekennzeichnet, daß** er bis zu 5 Gew.-% von Boriden, Carbiden, Nitriden oder/und Siliciden eines oder mehrerer Übergangsmetalle der 4., 5. oder/und 6. Gruppe des Periodensystems oder/und von Aluminium enthält.

11. Verwendung eines beschichteten Trägerkörpers nach einem oder mehreren der Ansprüche 1 bis 10 als Elektrode, insbesondere als Kathodenelement bei der schmelzelektrolytischen Herstellung von Aluminium, als Heizelement, als feuerfeste Auskleidung, als Hitzeschild, als verschleißfestes Element oder als Behälter, insbesondere als Tiegel oder Verdampferschiffchen, als Düse, als Element eines Wärmetauschers oder eines Kernreaktors, für Schmuckzwecke, für die Optik, Optoelektronik oder Elektronik.

**Claims**

1. Substrate body having a coating consisting of at least 95 % by weight titanium boride, **characterized in that** the coating has an oxygen content of less than or equal to 1 % by weight, a content of metallic impurities of less than or equal to 0.5 % by weight and a specific electrical resistance of less than or equal to 10 μΩ · m at ambient

temperature.

**2.** Substrate body according to claim 1, **characterized in that** the coating has a lamellar structure with an average ratio of the length of the lamellae to the height of the lamellae in transverse cross-section in the range of 1.5 : 1 to 10 : 1.

**3.** Substrate body according to claim 1 and/or 2, **characterized in that** the coating has a maximum porosity of 10% by volume, in particular 4 to 7 % by volume.

**4.** Substrate body according to one or more of claims 1 to 3, **characterized in that** the coating has no pore channels that connect the substrate body to the environment located external to the coating.

**5.** Substrate body according to one or more of claims 1 to 4, **characterized in that**, with an arrangement of the substrate body as a cathode element in a salt melt in a circuit for the electrolytic preparation of aluminium, the coating is resistant to this salt melt for at least one year.

**6.** Substrate body according to one or more of claims 1 to 5, **characterized in that** the coating has a high level of adhesion substrate bodies made of carbon and/or graphite, in particular graphitized carbon.

**7.** Substrate body according to one or more of claims 1 to 6, **characterized in that** the bonding strength of the coating on a substrate body made of carbon and/or graphite is higher than the strength of the material of the substrate body.

**8.** Substrate body according to one or more of claims 1 to 7, **characterized in that** the substrate body contains carbon and/or graphite, with the coating, if applicable in a Rapoport test, exhibiting no change in thermal expansion or a linear change in thermal expansion of $\leq 0.2$ %.

**9.** Substrate body according to one or more of claims 1 to 8, **characterized in that** the coating exhibits no or only little erosion in a six-hour erosion resistance test in an $Al_2O_3$-dross according to Liao et al. so that a sample that is coated in relation to a sample that is not coated has an erosion ratio of at most 1 : 2.

**10.** Substrate body according to one or more of claims 1 to 9, **characterized in that** it contains up to 5 % by weight borides, carbides, nitrides and/or silicides of one or more transition metals of the 4th, 5th and/or 6th group of the periodic system and/or aluminium.

**11.** Use of a coated substrate body according to one or more of claims 1 to 10 as an electrode, in particular as a cathode element in the preparation of aluminium by melt electrolysis, as a heating element, as a fireproof lining, as a thermal shield, as a wear-resistant element or as a container, in particular as a crucible or an evaporator boat, as a nozzle, as an element of a heat exchanger or a nuclear reactor, for decorative purposes, for optics, optoelectronics or electronics.

**Revendications**

**1.** Support comportant un revêtement constitué d'au moins 95 % de borure de titane,
**caractérisé en ce que**
le revêtement présente une teneur en oxygène inférieure ou égale à 1 % en poids, une teneur en impuretés métalliques inférieure ou égale à 0,5 % en poids et une résistance électrique spécifique inférieure ou égale à 10 $\mu\Omega$.m à la température ambiante.

**2.** Support selon la revendication 1,
**caractérisé en ce que**
le revêtement présente une structure lamellaire avec un rapport moyen de la longueur des lamelles à la hauteur des lamelles en section allant de 1,5:1 à 10:1.

**3.** Support selon la revendication 1 et/ou 2,
**caractérisé en ce que**
le revêtement présente une porosité d'au maximum 10 % en volume, en particulier de 4 à 7 % en volume.

**4.** Support selon une ou plusieurs des revendications 1 à 3,
**caractérisé en ce que**
le revêtement ne présente pas de canaux de pores reliant le support avec l'environnement qui se trouve à l'extérieur du revêtement.

**5.** Support selon une ou plusieurs des revendications 1 à 4,
**caractérisé en ce que**,
lorsqu'on monte le support comme élément de cathode pour la fabrication de l'aluminium par électrolyse, il résiste au moins un an à ce mélange de sels fondus.

**6.** Support selon une ou plusieurs des revendications 1 à 5,
**caractérisé en ce que**
le revêtement présente une grande adhérence sur des supports de carbone et/ou de graphite, en particulier de carbone graphité.

**7.** Support selon une ou plusieurs des revendications 1 à 6,
**caractérisé en ce que**
la solidité de l'adhérence du revêtement sur un support de carbone et/ou de graphite est plus élevée que la solidité mécanique du matériau du support.

**8.** Support selon une ou plusieurs des revendications 1 à 7,
**caractérisé en ce que**
le support contient du carbone et/ou du graphite, le revêtement présentant le cas échéant dans un test de Rapoport une modification d'allongement thermique nulle ou linéaire $\leq 0,2$ %.

**9.** Support selon une ou plusieurs des revendications 1 à 8,
**caractérisé en ce que**
le revêtement présente une érosion nulle ou faible dans un test de résistance à l'érosion de six heures dans une barbotine d'$Al_2O_3$ selon Liao et al., si bien qu'un échantillon revêtu présente, par comparaison avec un échantillon non revêtu, un rapport de déblai d'au plus 1:2.

**10.** Support selon une ou plusieurs des revendications 1 à 9,
**caractérisé en ce qu'**
il contient jusqu'à 5 % en poids de borures, carbures, nitrures et/ou siliciures d'un ou plusieurs des métaux de transition des 4$^{ème}$, 5$^{ème}$ et/ou 6$^{ème}$ groupes de la classification périodique des éléments et/ou de l'aluminium.

**11.** Utilisation d'un support revêtu selon une ou plusieurs des revendications 1 à 10 comme électrode, en particulier comme élément de cathode dans la fabrication de l'aluminium par électrolyse ignée, comme élément chauffant, comme revêtement ignifuge, comme bouclier thermique, comme élément anti-usure ou comme récipient, en particulier comme creuset ou comme navette de vaporisateur, comme buse, comme élément d'échangeur de chaleur ou de réacteur nucléaire, dans des buts de décoration, en optique, optoélectronique ou électronique.